# EUROPÄISCHE PATENTANMELDUNG

(11) **EP 2 090 636 A1**
(43) Veröffentlichungstag der Anmeldung: **19.08.2009**
(21) Anmeldenummer: 08021324.2
(22) Anmeldetag: 09.12.2008
(51) Int. Cl.: C09K 9/02, C08L 23/00, C08K 5/00

(54) **Photochrome Zusammensetzung und deren Verwendung**

(30) Priorität: 07.01.2008 DE 102008003313
(71) Anmelder: Teijin Monofilament Germany GmbH, 86399 Bobingen (DE)
(72) Erfinder: Berndt, Kurt-Günter, 86836 Graben (DE); Delker, Rex, 86517 Wehringen (DE)
(74) Vertreter: Ackermann, Joachim

(57) **Zusammenfassung**

Beschrieben werden photochrome Zusammensetzungen enthaltend a) ein thermoplastisches, elastomeres Polymer und b) ein photochromes Material.

Diese Zusammensetzungen lassen sich als Formkörper, insbesondere in der Form von Folien und insbesondere von Fäden bzw. von textilen Flächengebilden enthaltend derartige Fäden zur Abschattung von Räumen oder im Agrarbereich einsetzen.

## Beschreibung

Die vorliegende Erfindung betrifft eine photochrome Zusammensetzung enthaltend ein thermoplastisches elastomeres Polymer und ein photochromes Material. Weiterhin betrifft die Erfindung die Verwendung der erfindungsgemäßen Zusammensetzung zur Herstellung von Formkörpern, insbesondere in der Form von Folien, Fasern und Schäumen sowie die Formkörper.

Photochromie ist eine Erscheinung, welche die reversible Änderung der Farbe eines photochromen Materials (oder eines Gegenstandes, der ein solches Material enthält) betrifft. Unter Photochromie versteht man eine lichtinduzierte reversible Umwandlung von Molekülen unter Änderung des Absorptionsspektrums und der physikalischen Eigenschaften. Die Rückreaktion kann thermisch oder photochemisch ablaufen. Im thermischen Fall kehrt das System in der Regel spontan in den Ursprungszustand zurück, sobald die anregende Strahlungsquelle wegfällt. Bei photochemischer Photochromie bleibt der geänderte Zustand nach Wegfall der anregenden Lichtquelle in der Regel zunächst bestehen und nähert sich erst sehr langsam wieder dem energetischen Gleichgewicht. Durch stimulierte Emission mit einer bestimmten Wellenlänge kann die Rückreaktion erheblich beschleunigt werden. Im Gegensatz zu den bekannten lichtinduzierten Reaktionen ist die photochrome Umwandlung reversibel. Das photochrome Material verändert also seine Farbe, wenn es einer Bestrahlung mit Licht, z.B. der im Sonnenlicht enthaltenen UV-Strahlung, ausgesetzt wird und kehrt zur ursprünglichen Farbe zurück, wenn die Einwirkung der UV-Strahlung unterbrochen wird bzw. wenn die Rückumwandlung durch Strahlung einer anderen Wellenlänge ausgelöst wird. Die Funktionsweise von photochromen Materialien kann auf unterschiedlichsten molekularen Mechanismen beruhen, wie der cis, trans-Isomerisierung, der pericyclischen Reaktion, dem intermolekularen Wasserstoffatomtransfer, dem intra-molekularen Gruppentransfer, dem Dissoziationsprozess oder dem Elektronentransfer. Die durch solche photochemische Reaktionen üblicherweise ausgelösten Strukturänderungen der betroffenen Moleküle sind häufig auch mit Änderungen anderer Eigenschaften des photochromen Stoffes, wie dessen Brechungsindex, verbunden. Diese Effekte werden bereits in mehreren technischen Gebieten ausgenutzt. So wurden photochrome Materialien mit je nach ihrer Beleuchtung veränderlicher Lichtdurchlässigkeit bereits eingesetzt. Solche Materialien können bei Einwirkung von intensiver Belichtung in reversibler Weise lichtabsorbierende Eigenschaften annehmen und verringern daher die durch das Material hindurchgehende Lichtmenge. Zu diesen photochromen Materialien zählen beispielsweise optische Linsen, Brillengläser, Fenster und Textilien.

Das Einbringen eines photochromen Materials in ein Polymer ist an sich bekannt. So beschreibt DE 690 10 335 T2 einen photochromen Polymergegenstand auf Basis von einer Polyol(allylcarbonat)-Zusammensetzung, welcher mit einem aliphatischen Polyurethan mit endständigen ethylenischen Doppelbindungen copolymerisiert ist. Diesem Polymer können durch Einarbeiten oder Aufbringen photochrome Verbindungen zugesetzt werden. Die so hergestellten photochromen Gegenstände zeigen ein ver-bessertes Ansprechen des photochromen Gleichgewichts auf.

In der DE 27 18 406 A1 werden durch anionische Polymerisation gebildete photochrome Materialien beschrieben. Darin werden die unterschiedlichen Blockpolymerisate wie Polyacryl- oder Polystyrolderivate verwendet und mit einem photochromen Stoff versetzt. Dieser ist in einer bevorzugten Ausführungsform an das jeweilige Blockpolymer selektiv gebunden. Hierdurch wird die Wirkung des photochromen Stoffes verbessert.

Aus der US-A-2007/0113358 ist ein Verfahren zur Herstellung von gefärbten Fasern durch Elektrospinnenbekannt, die ein thermoplastisches Polymer und ein photochromes Material enthalten. Als verspinnbare Polymere werden Polyester wie Polyethylenterephthalat oder Polydimethylisophthalat, Polymethylmethacrylat, Polycarbonat, Polystyrol, Polyvinylidenchlorid, Polyvinylidenfluorid, Polyethylenoxid und verschiedene Polyamide des Nylontyps genannt. Diese photochromen Fasern zeichnen sich durch verbesserte photochromen Eigenschaften aus.

In der US-A-5,213,733 wird ein Verfahren zur Herstellung von Synthesefasern enthaltend photochrome Pigmente beschrieben. Als verspinnbare Polymere werden Polypropylen, Polyethylen, Ethylen-Propylen-Copolymere oder Ethylen-Propylen-Dien-Terpolymere, sowie Polyamide des Nylon-Typs, Polyester, wie Polyethylenterephthalat und Polybutylenterephthalat, genannt.

Allerdings sind die photochromen Effekte bei den aus dem Stand der Technik bekannten Materialien häufig eingeschränkt, da durch die verwendeten Polymeren, die meist hart sind, die Änderung der chemischen Struktur des photochromen Materials behindert wird.

Auch werden für einige Anwendungsgebiete, z.B. für Effektfäden, vorzugsweise Zusammensetzungen und daraus hergestellte Formkörper mit einer hohen Dehnfähigkeit verlangt.

Aufgabe der vorliegenden Erfindung ist die Bereitstellung einer Zusammensetzung, die einen hervorragenden photochromen Effekt aufweist und die darüber hinaus eine hohe Dehnfähigkeit aufweist.

Es wurde nun überraschend gefunden, dass ein weiches Polymer in Form eines thermoplastischen, elastomeren Polymeren und ein photochromes Material zu photochromen Zusammensetzungen oder zu Formkörpern verarbeitet werden können, die sich durch ausgeprägt starke photochrome Effekte auszeichnen.

Die Erfindung betrifft daher photochrome Zusammensetzungen enthaltend a) ein thermoplastisches, elastomeres Polymer und b) ein photochromes Material.

Bei den erfindungsgemäß eingesetzten thermoplastischen, elastomeren Polymeren kann es sich um unterschiedliche Typen handeln. Solche Polymere sind dem Fachmann bekannt.

Beispiele hierfür sind thermoplastische, elastomere Polyester (TPE-E), thermoplastische, elastomere Polyamide (TPE-A), thermoplastische, elastomere Polyurethane (TPE-U), thermoplastische, elastomere Polyolefine (TPE-O) und thermoplastische, elastomere Styrol-Blockcopolymere (TPE-S).

Die thermoplastischen, elastomeren Polymere sind üblicherweise Blockcopolymere, die aus unterschiedlichen Monomerkombinationen aufgebaut sein können. In der Regel handelt es sich um Blöcke aus sogenannten Hart- und Weichsegmenten. Die Weichsegmente leiten sich bei den TPE-U, den TPE-E und den TPE-A typischerweise von Polyalkylenglykolen ab. Die Hartsegmente leiten sich bei den TPE-U, den TPE-E und den TPE-A typischerweise von kurzkettigen Diolen oder Diaminen ab. Neben den Diolen bzw. Diaminen werden die Hart- und Weichsegmente von aliphatischen, cycloaliphatischen und/oder aromatischen Diisocyanaten oder Dicarbonsäuren aufgebaut.

Besonders geeignete Polyalkylenglykole sind Polyethylenglykol, Polypropylenglykol und/oder Polybutylenglykol.

Besonders geeignete kurzkettige Diole sind aliphatische und/oder cycloaliphatische Diole, beispielsweise Ethylenglykol, Propandiol, 1,4-Butandiol, 1,4-Cyclohexandimethanol oder deren Gemische. Bevorzugt sind aliphatische Diole, die zwei bis vier Kohlenstoffatome aufweisen, insbesondere Ethylenglykol und Butandiol. Weiter bevorzugt sind cycloaliphatische Diole, wie 1,4-Cyclohexandimethanol.

Besonders geeignete kurzkettige Diamine sind aliphatische und/oder aromatische Diamine, beispielsweise Tetramethylendiamin, Hexamethylendiamin, Nonamethylendiamin, Undecamethylendiamin, Dodecamethylendiamin, Xylylendiamin. Bevorzugtes zweiwertiges Amin ist Hexamethylendiamin.

Ein weiterer Baustein der thermoplastischen, elastomeren Polyester oder Polyamide sind die oben genannten Dicarbonsäuren. Hierbei handelt es sich um aliphatische, cycloaliphatische und/oder aromatische Dicarbonsäuren, beispielsweise Adipinsäure, Sebacinsäure, Terephthalsäure, Cyclohexandicarbonsäure, Isophthalsäure, Dodecandicarbonsäure, Glutarsäure. Hauptsäurebestandteil der Blockcopolymere sind Terephthalsäure, Sebacinsäure oder Cyclohexandicarbonsäure.

Ein weiterer Baustein der thermoplastischen, elastomeren Polyurethane sind die oben genannten Diisocyanate. Hierbei handelt es sich um aliphatische, cycloaliphatische und/oder aromatische Diisocyanate, beispielsweise Isophorondiisocyanat oder Toluoldiisocyanat.

Beispiele für thermoplastische Polyolefine sind Block-Copolymere, die Blöcke aus Ethylen-Propylen-Butadien und aus Polypropylen (EPDM/PP) oder aus Nitril-Butadien und aus Polypropylen (NBR/PP) aufweisen.

Beispiele für thermoplastische, elastomere Styrol-Blockcopolymere sind Block-Copolymere, die Blöcke aus Styrol-Ethylen und aus Propylen-Styrol (SEPS) oder aus aus Styrol-Ethylen und aus Butadien-Styrol (SEBS) oder aus Styrol und aus Butadien (SBS) aufweisen.

Unter thermoplastischen, elastomeren Polymeren sind im Rahmen dieser Beschreibung Polymere zu verstehen, die sich bei Raumtemperatur vergleichbar den klassischen Elastomeren verhalten, sich jedoch unter Wärmezufuhr plastisch verformen lassen und somit ein thermoplastisches Verhalten zeigen. Diese thermoplastischen, elastomeren Polymere haben in Teilbereichen physikalische Vernetzungspunkte (z.B. Nebenvalenzkräfte oder Kristallite), die sich bei Wärme auflösen, ohne dass sich die Polymermoleküle zersetzen.

Das polymere Grundmaterial der erfindungsgemäßen Zusammensetzung ist vorzugsweise durchsichtig oder optisch klar, damit der Effekt der darin eingebrachten photochromen Materialien verstärkt zur Geltung kommt.

Photochrome Materialien, die zum Herstellen der erfindungsgemäßen Zusammensetzung verwendet werden können, sind dem Fachmann bekannt.

Als photochrome Materialien können alle beliebigen photochromen anorganischen und organischen Materialien verwendet werden, die, wenn sie in eine Matrix enthaltend thermoplastische, elastomere Polymere eingearbeitet werden oder auf der Oberfläche eines Formkörpers aus diesen Polymeren aufgetragen werden, eine sichtbare photochrome Reaktion ergeben und die mit dem Polymer chemisch verträglich sind.

Besonders in Betracht kommende Klassen von photochromen Materialien schließen ein: Spiropyrane, Spirooxazine, Chromene, Hexa-1,3,5-triene, Diheteroarylethene, Diarylethene und Cyclohex-1,3-diene, Pyrazoline, Azoverbindungen, Azine, Thioindigo- oder Hemithioindigo Verbindungen, Anile, Benzylpyridine, Salicylate, Triazole, Oxazole, Metalldithizonate, polycyclische Chinone, Triarylmethane, Triarylimidazoldimere, Polychlornaphthaline, insbesondere Tetrachlornaphthaline, Polychlortoluol, insbesondere Perchlortoluol, Nitrosodimere, Hydrazine oder Silberhalogenide.

Bevorzugt eingesetzt werden Thioindigo-Derivate, Hemithioindigo-Derivate, Metalldithizonatverbindungen, Spirooxazine, Spiropyrane, Azobenzol-Derivate, Triphenylmethan-Verbindungen, Diarylethene, insbesondere Stilben oder substituiertes Stilben, Chromene, Fulgide und Fulgimide.

Das im Einzelfall zur Verwendung ausgewählte photochrome Material hängt von seiner Verträglichkeit mit der Polymermatrix und der jeweils gewünschten Farbänderung ab, die für die photochrome Zusammensetzung gewünscht wird. Dem Fachmann sind die Auswahlkriterien dafür bekannt.

Das photochrome Material in den erfindungsgemäßen Zusammensetzungen kann alleine oder in Form von Mischungen verschiedener Materialien eingesetzt werden. Die photochromen Materialien können z.B. in Form von trockenen Farbstoffen, flüssigen Farbstoffen, eingekapselten Farbstoffen, Farbstoff-Dispersionen oder ganz besonders bevorzugt in Form eines Masterbatches mit einem Trägerpolymeren, beispielsweise einem Polyolefin, eingesetzt werden.

Das Einbringen oder das Aufbringen des photochromen Materials in oder auf das thermoplastische, elastomere Polymere kann nach verschiedenen im Stand der Technik beschriebenen Verfahren ausgeführt werden. Dazu zählen z.B. das Vermischen des photochromen Materials mit dem Polymer, das Auflösen und/oder das Dispergieren des photochromen Materials in das Polymer und das Aufbringen des photochromen Materials als Überzug auf die Oberfläche eines Formkörpers aus thermoplastisch, elastomerem Polymer.

In einer bevorzugten Ausführungsform enthält die erfindungsgemäße Zusammensetzung neben den Komponenten a) und b) noch Komponente c), ein Polymer mit einem Schmelzpunkt im Bereich oder unterhalb des Schmelzpunktes des thermoplastisch, elastomeren Polymeren der Komponente a), vorzugsweise von wenigstens 10°C unterhalb des Schmelzpunkts des thermoplastisch elastomeren Polymers der Komponente a).

Als Komponente c) kommen ausgewählte Polymere zum Einsatz. Dabei handelt es sich üblicherweise um die Polymerkomponente eines bei der Herstellung der erfindungsgemäßen Zusammensetzungen eingesetzten Masterbatches. Um eine ausreichende Verformbarkeit und Vermischbarkeit im Extruder zu gewährleisten, sollte der Schmelzpunkt des Polymeren der Komponente c) im Bereich des Schmelzpunktes oder vorzugsweise mindestens 10 °C unterhalb des Schmelzpunktes des Polymeren der Komponente a) liegen.

Beispiele für geeignete Polymere der Komponente c) sind Polyester, Polyamide, Polyolefine, wie Polyethylen oder Polypropylen, oder thermoplastische, elastomere Polymere. Letztere sind besonders bevorzugt. Ganz besonders bevorzugt enthält ein Masterbatch denselben Typ an Polymer wie das Polymere der Komponente a), beispielsweise ein TPE-E, falls Komponente a) ein TPE-E ist.

Die photochromen Moleküle sind im erfindungsgemäss eingesetzten Masterbatch als Farbstoff gelöst. Das Masterbatch wird in die Polymermatrix eingebracht. Bei Lichteinfall absorbierten die photochromen Moleküle Energie und ändern damit ihre Farbe. Die Energieabsorption ist abhängig von der Art des umgebenden Polymers. Erfindungsgemäß werden thermoplastische, elastomere Polymere eingesetzt. Es hat sich gezeigt, dass diese einen ausgepägten photochromen Effekt ausbilden.

Die erfindungsgemäßen Zusammensetzungen können neben Komponenten a), b) und gegebenenfalls c) noch weitere Zusätzstoffe d) enthalten.

Beispiele dafür sind Hydrolysestabilisatoren, Verarbeitungshilfsmittel, Antioxidantien, UV-Stabilisatoren, Weichmacher, Gleitmittel, Pigmente, elektrische Leitfähigkeit vermittelnde Zusätze, Viskositätsmodifizierer oder Kristallisationbeschleuniger.

Beispiele für Hydrolysestabilisatoren sind Carbodiimide oder epoxidierte Verbindungen.

Beispiele für Verarbeitungshilfsmittel sind Siloxane, Wachse oder längerkettige Carbonsäuren oder deren Salze, aliphatische, aromatische Ester oder Ether.

Beispiele für Antioxidantien sind Phosphorverbindungen, wie Phosphorsäureester, oder sterisch gehinderte Phenole.

Beispiele für UV-Stabilisatoren sind UV-absorbierende Verbindungen, wie Benzophenone oder Benztriazole, oder Verbindungen vom Typ HALS ("hindered amine light stabilizer").

Ein Beispiel für einen Weichmacher ist Dioctylphthalat.

Beispiele für Gleitmittel sind Polyolefinwachse.

Beispiele für Pigmente oder Mattierungsmittel sind organische Farbstoffpigmente oder Titandioxid.

Ein Beispiele für einen elektrische Leitfähigkeit vermittelnden Zusatz ist Ruß.

Beispiele für Viskositätsmodifizierer sind mehrwertige Carbonsäuren und deren Ester oder mehrwertige Alkohole.

Die erfindungsgemäßen photochromen Zusammensetzungen zeichnen sich durch hervorragende photochrome Eigenschaften aus.

Diese Zusammensetzungen lassen sich in üblicher Weise zu Formkörpern verarbeiten, vorzugsweise durch Extrusion der plastifizierten Polymermasse und daran sich anschließende Formgebung, gegebenenfalls gefolgt von bekannten Verstreck- und Relaxierschritten.

Die aus der erfindungsgemäßen Zusammensetzung hergestellten Formkörper können beliebige Gestalt aufweisen. Vorzugsweise eignet sich die erfindungsgemäße Zusammensetzung zur Herstellung von Folien und ganz besonders zur Herstellung von Fäden.

Diese Formkörper sind ebenfalls Gegenstand der vorliegenden Erfindung.

Unter Fäden werden im Rahmen dieser Beschreibung ganz allgemein Fasern endlicher Länge (Stapelfasern), Fasern unendlicher Länge (Filamente) sowie daraus zusammengesetzte Multifilamente oder aus Stapelfasern sekundär gesponnene Garne verstanden. Bevorzugt sind schmelzgesponnene Fäden in Form von Monofilamenten.

Unter Monofilamenten werden im Rahmen dieser Beschreibung einzelne Fäden verstanden. Diese weisen typischerweise Durchmesser von 0,055 bis 2,00 mm, vorzugsweise von 0,10 bis 0,60 mm, auf.

In einer besonders bevorzugten Ausführungsform liegen die erfindungsgemäßen Fäden als Monofilamente, ganz besonders als Kern-Mantel-Monofilamente vor. Bei letzteren besteht der Mantel vorzugsweise aus einer Zusammensetzung enthaltend Komponenten a), b), gegebenenfalls c) und/oder gegebenenfalls d) und der Kern besteht aus einem fadenbildenden Polymer, das die mechanischen Eigenschaften, hauptsächlich die Festigkeit und Reißdehnung, des Gesamtfadens bestimmt.

Eine besonders bevorzugte Kombination ist ein Kern-Mantel-Faden, dessen Kern aus Polyester, vorzugsweise aus Polyethylenterephthalat, besteht und dessen Mantel die Komponenten a), b), gegebenenfalls c) und/oder gegebenenfalls d) enthält. Bei diesen Fäden bestimmt der Kern in erster Linie die mechanischen Eigenschaften, während der Mantel die photochromen Eigenschaften bestimmt.

Bevorzugt eingesetzt als Kernkomponente werden Polyethylenterephthalat-Homopolymere oder Copolymere enthaltend Ethylenterephthalateinheiten. Diese Polymeren leiten sich also ab von Ethylenglykol und gegebenenfalls weiteren Alkoholen sowie von Terephthalsäure oder deren polyesterbildenden Derivaten, wie Terephthalsäureestern oder -chloriden.

Es können aber auch Kernkomponenten aus anderen Polyestern oder aus Polyamiden oder aus Polyolefinen, wie Polybutylenterephthalat, Polypropylenterephthalat, Polyethylennaphtalat-Homopolymer, Copolymere enthaltend Ethylennaphthalateinheiten, Polyamid-6, Polyamid-6,6, Polyethylen oder Polypropylen, eingesetzt werden.

Der Titer der erfindungsgemäßen Fäden kann in weiten Bereichen schwanken. Beispiele dafür sind 1 bis 45.000 dtex, insbesondere 100 bis 4.000 dtex.

Die Querschnittsform der erfindungsgemäßen Fäden kann beliebig sein, beispielsweise rund, oval oder n-eckig, wobei n größer gleich 3 ist.

Die Mengen an Komponenten a), b) und gegebenenfalls c) und/oder gegebenenfalls d) in den erfindungsgemäßen Zusammensetzungen können in weiten Bereichen gewählt werden.

Üblicherweise enthält die erfindungsgemäße Zusammensetzung 70 bis 99,999 Gew. %, vorzugsweise 95 bis 99,98 Gew. %, an Komponente a), bezogen auf die Gesamtmasse der Zusammensetzung. Die Menge der Komponente a) in der erfindungsgemäßen Zusammensetzung wird vom Fachmann in Abhängigkeit des gewünschten Verwendungszweckes und/oder der vorgesehenen Verarbeitung ausgewählt.

Die Menge des photochromen Materials b) in der erfindungsgemäßen Zusammensetzung wird vom Fachmann ebenfalls in Abhängigkeit des gewünschten Verwendungszweckes und/oder der vorgesehenen Verarbeitung ausgewählt. Üblicherweise beträgt die Menge des photochromen Materials in der erfindungsgemäßen Zusammensetzung 0,0001 bis 5 Gew. %, bezogen auf Gesamtmasse der Zusammensetzung, vorzugsweise beträgt die Menge des photochromen Materials 0,001 bis 1 Gew. %, insbesondere 0,01 bis 0,5 Gew.-%, und besonders bevorzugt 0,02 bis 0,1 Gew.-%.

Die Menge der optional vorliegenden Komponente c) in der erfindungsgemäßen Zusammensetzung wird vom Fachmann ebenfalls in Abhängigkeit des gewünschten Verwendungszweckes und/oder der vorgesehenen Verarbeitung ausgewählt. Üblicherweise beträgt die Menge dieser Komponente 0 bis 25 Gew. %, bezogen auf die Gesamtmasse der Zusammensetzung.

Auch der Anteil der optional eingesetzten Zusatzstoffe d) wird vom Fachmann nach dem beabsichtigen Verwendungszweck und/oder der vorgesehenen Verarbeitung ausgewählt. Üblicherweise beträgt der Anteil der Komponente d) bis zu 20 Gew. %, vorzugsweise bis zu 10 Gew. %, bezogen auf die Gesamtmasse der Zusammensetzung.

Die zur Herstellung der erfindungsgemäßen Zusammensetzungen benötigten Komponenten a), b), gegebenenfalls c) und/oder gegebenenfalls d) sind an sich bekannt, teilweise kommerziell erhältlich oder können nach an sich bekannten Verfahren hergestellt werden.

Bevorzugt werden die erfindungsgemäßen Fäden zur Herstellung von textilen Flächengebilden, insbesondere von Geweben, Gelegen, Gewirken, Geflechten oder Gestricken, eingesetzt. Diese textilen Flächengebilde sind ebenfalls Gegenstand der vorliegenden Erfindung.

Die erfindungsgemäßen Fäden können als Effekt- oder Markierfäden in Dekorstoffen verwendet werden. Besonders bevorzugt ist die Verwendung photochromer Markierfäden in textilen Markenartikeln. Vorteilhaft dabei ist, dass der photochrome Effekt zur Echtheitsprüfung gegenüber Plagiaten herangezogen werden kann.

Folien aus den erfindungsgemäßen Zusammensetzungen oder textile Flächengebilde enthaltend Fäden aus den erfindungsgemäßen Zusammensetzungen können zur Abschattung von Bereichen verwendet werden, in denen bei UV-Einstrahlung in Transmission eine Abdunklung und/oder eine erhöhte Reflektion bestimmter Farben erwünscht ist, insbesondere in Büroräumen oder im Agrarbereich.

Beim Einsatz zur Abschattung für Büroräume können die Folien oder textilen Flächengebilde in vielerlei Formen, wie Rollos, Jalousien, Gardinen, Lamellenvorhängen oder Vorhängen eingesetzt werden. Vorteilhaft ist, dass die Folien oder textilen Flächengebilde aufgrund des photochromen Effekts einen in Abhängigkeit von der Lichtintensität variablen Transmissionsgrad aufweisen und somit ein mechanisches Verschieben, wie ein Auf- und Zuziehen des Vorhangs oder der Gardine zur Veränderung der Einstrahlungsqualität, überflüssig ist.

Bei der Anwendung im Agrarbereich können Folien aus den erfindungsgemäßen Zusammensetzungen oder textile Flächengebilde enthaltend Fäden aus den erfindungsgemäßen Zusammensetzungen beispielsweise in Gewächshäusern, Frühbeeten oder im Freien verwendet, besonders bevorzugt zum Überdecken von Beeten oder Feldern. Vorteilhaft ist, dass einerseits das flächige Material gut handhabbar ist und sich so schnell auf den Beeten aufspannen oder abnehmen lässt und dass andererseits durch die photochromen Eigenschaften des flächigen Materials eine übermäßige Hitze als auch eine übermäßige Lichteinwirkung bei ausreichender Luftdurchlässigkeit verhindert werden kann. Die erfindungsgemäßen flächigen Materialien sind daher besonders im gewerbsmäßigen Anbau von Zier- und Nutzpflanzen geeignet, die Halbschatten- bis Schattenlage benötigen.

Die vorliegende Erfindung wird im folgenden Beispiel ausführlicher beschrieben, welches nur als Erläuterung und nicht als Einschränkung dienen soll.

### Beispiel 1

Auf einer Schmelzspinnanlage zur Herstellung von Monofilamenten wurde ein thermoplastischer, elastomerer Polyester in Schnitzelform eingesetzt (Heraflex E 5620; Fa. Radici / Chignolo d'Isola, Italien). Vor dem Spinnprozess wurden 4 Gew. % eines Masterbatches (Produkt 9/68971 PP; Fa. AW GmbH / Lichtenfels, Deutschland) im Fallrohr des Extruders in den TPE-E Schnitzelstrom gravimetrisch zudosiert. Das Gemisch wurde im Extruder aufgeschmolzen, über eine Spinnpumpe einem Spinnpack zugeführt, durch feine Bohrungen zu Monofilamenten versponnen, im Wasserbad abgeschreckt, anschließend unter Temperatureinwirkung mehrfach gestreckt und auf Scheibenspulen aufgespult.

Bei dem Masterbatch 9/68971 PP handelte es sich um ein 1 Gew.-%iges Compound des photochromen Farbstoffs Reversacol Palatinate Purple (Fa. James Robinson / Huddersfield (UK)) in Polypropylen.

Die erhaltenen Monofilamente wiesen folgende Fasereigenschaften auf:

| | |
|---|---|
| Durchmesser | 0,200 mm (392 dtex) |
| Festigkeit | > 27 cN/tex |
| Bruchdehnung | > 48 % |
| Thermoschrumpf | ca. 45 % bei 160 °C |

Die hergestellten Monofilamente wiesen einen ausgeprägten photochromen Effekt auf. Dieser wurde an Probekörpern (= Plättchen enthaltend den gewünschten photochromen Farbstoff oder oben beschriebene Monofilamente) überprüft. Die Probekörper waren ohne nennenswerte Lichteinstrahlung weitgehend translucent und verfärbten sich bei Einstrahlung dunkel. Zur Beurteilung des photochromen Effektes wurde der Probekörper mit einer Leuchtdiode im blau-violetten Spektralbereich bestrahlt und die Beurteilung visuell vorgenommen. Dabei wurden Schnelligkeit, mit welcher der Farbumschlag hell-dunkel stattfand, die Erholungsphase, also die Dauer, bis das Material wieder weitgehend translucent war, sowie die Intensität der Verfärbung visuell beurteilt. In allen Fällen fand der Hell-Dunkel Umschlag im Sekundenbereich statt, während die Erholungsphase sich bis in den Minutenbereich erstreckte.

## Patentansprüche

1. Photochrome Zusammensetzung enthaltend a) ein thermoplastisches, elastomeres Polymer und b) ein photochromes Material.

2. Photochrome Zusammensetzung nach Anspruch 1, **dadurch gekennzeichnet, dass** das thermoplastische, elastomere Polymer ausgewählt wird aus der Gruppe der thermoplastischen, elastomeren Polyester, der thermoplastischen, elastomeren Polyamide, der thermoplastischen, elastomeren Polyurethane, der thermoplastischen, elastomeren Polyolefine, der thermoplastischen, elastomeren Styrol-Blockcopolymeren oder aus Gemischen von zwei oder mehreren dieser Polymeren.

3. Photochrome Zusammensetzung nach Anspruch 2, **dadurch gekennzeichnet, dass** das thermoplastische, elastomere Polymer ein thermoplastischer, elastomerer Polyester ist.

4. Photochrome Zusammensetzung nach Anspruch 3, **dadurch gekennzeichnet, dass** der thermoplastische, elastomere Polyester sich ableitet von einer aliphatischen, cycloaliphatischen und/oder aromatischen Dicarbonsäure und einem aliphatischen und/oder cycloaliphatischen Diol sowie von einem Polyalkylenglykol.

5. Photochrome Zusammensetzung nach einem der Ansprüche 1 bis 4, **dadurch gekennzeichnet, dass** das photochrome Material in eine Matrix enthaltend das thermoplastische, elastomere Polymere eingearbeitet worden ist und/oder auf der Oberfläche eines Formkörpers aus dem thermoplastischen, elastomeren Polymeren aufgetragen worden ist.

6. Photochrome Zusammensetzung nach einem der Ansprüche 1 bis 5, **dadurch gekennzeichnet, dass** das photochrome Material ausgewählt wird aus der Gruppe der Thioindigo-Derivate, Hemithioindigo-Derivate, Metalldithizonatverbindungen, Spirooxazine, Spiropyrane, Azobenzol-Derivate, Triphenylmethan-Verbindungen, Diarylethene, insbesondere Stilben oder substituiertes Stilben, Chromene, Fulgide, Fulgimide oder aus einer Kombination von zwei oder mehreren dieser Materialien.

7. Photochrome Zusammensetzung nach einem der Ansprüche 1 bis 6, **dadurch gekennzeichnet, dass** diese neben den Komponenten a) und b) noch Komponente c), ein Polymer mit einem Schmelzpunkt im Bereich oder unterhalb des Schmelzpunktes des thermoplastisch, elastomeren Polymeren der Komponente a) enthält.

8. Photochrome Zusammensetzung nach einem der Ansprüche 1 bis 7, **dadurch gekennzeichnet, dass** diese neben Komponenten a), b) und gegebenenfalls c) noch weitere Zusatzstoffe d) enthält.

9. Photochrome Zusammensetzung nach Anspruch 8, **dadurch gekennzeichnet, dass** die weiteren Zusatzstoffe d) ausgewählt werden aus der Gruppe der Hydrolysestabilisatoren, Verarbeitungshilfsmittel, Antioxidantien, UV-Stabilisatoren, Weichmacher, Gleitmittel, Pigmente, elektrische Leitfähigkeit vermittelnden Zusätze, Viskositätsmodifizierer, Kristallisationbeschleuniger oder aus Kombinationen von zwei oder mehreren dieser Zusatzstoffe.

10. Photochrome Zusammensetzung nach einem der Ansprüche 1 bis 9, **dadurch gekennzeichnet, dass** das photochrome Material in Mengen von 0,001 bis 0,1 Gew.-%, bevorzugt 0,02 bis 0,06 Gew.-% enthalten ist.

11. Photochrome Zusammensetzung nach einem der Ansprüche 1 bis 10, **dadurch gekennzeichnet, dass** diese in Form eines Fadens oder einer Folie vorliegt.

12. Photochrome Zusammensetzung nach Anspruch 11, **dadurch gekennzeichnet, dass** der Faden als Monofilament vorliegt, ganz besonders als Kern-Mantel-Monofilament, bei denen der Mantel vorzugsweise aus einer Zusammensetzung enthaltend Komponenten a), b), gegebenenfalls c) und/oder gegebenenfalls d) besteht und der Kern aus einem fadenbildenden Polymer besteht, das die mechanischen Eigenschaften des Gesamtfadens bestimmt.

13. Verwendung der photochromen Zusammensetzung nach einem der Ansprüche 1 bis 10 zur Herstellung von Formkörpern, insbesondere zur Herstellung von Folien oder Fäden, ganz besonders bevorzugt von Monofilamenten.

14. Verwendung nach Anspruch 13, **dadurch gekennzeichnet, dass** die Fäden zur Herstellung von textilen Flächengebilden eingesetzt werden, insbesondere zur Herstellung von Geweben, Gelegen, Gewirken, Geflechten oder Gestricken.

15. Verwendung der photochromen Zusammensetzung nach einem der Ansprüche 13 bis 14 als Effekt- oder Markierfäden in Dekorstoffen oder als Markierfäden in textilen Markenartikeln.

16. Verwendung der photochromen Zusammensetzung nach einem der Ansprüche 13 bis 14 in der Form von Folien oder von textilen Flächengebilden zur Abschattung von Bereichen, in denen bei UV-Einstrahlung in Transmission eine Abdunklung und/oder eine erhöhte Reflektion ausgewählter Spektralbereiche erwünscht ist, insbesondere in Büroräumen oder im Agrarbereich.

17. Verwendung nach Anspruch 16, **dadurch gekennzeichnet, dass** die Folien oder textilen Flächengebilde in der Form von Rollos, Jalousien, Gardinen, Lamellenvorhängen oder Vorhängen eingesetzt werden.

18. Verwendung nach Anspruch 16, **dadurch gekennzeichnet, dass** die Folien oder textilen Flächengebilde in Gewächshäusern, Frühbeeten oder im Freien eingesetzt werden, besonders bevorzugt zum Überdecken von Beeten oder Feldern.
